# FASCICULE DE BREVET EUROPEEN

(11) **EP 0 558 417 B1**
(45) Date de publication et mention de la délivrance du brevet: **15.10.1997**
(21) Numéro de dépôt: 93400485.4
(22) Date de dépôt: 25.02.1993
(51) Int. Cl.: C04B 35/52, C04B 35/64, C04B 35/80

(54) **Procédé de fabrication d'une pièce en matériau composite carbone/carbone utilisant de la poudre de mésophase**
Verfahren zur Herstellung eines Bauteils aus Kohle/Kohle-Verbundwerkstoff unter Verwendung von Mesophasenpulver
Method of making carbon/carbon-composite articles from mesophase powder

(30) Priorité: 28.02.1992 FR 9202386
(43) Date de publication de la demande: 01.09.1993
(73) Titulaire: AEROSPATIALE Société Nationale Industrielle, 75781 Paris Cédex 16 (FR)
(72) Inventeur: Hocquellet, Dominique, F-33160 Saint Medard en Jalles (FR); Chenier, Jean Pascal, F-33320 Le Taillan Medoc (FR)
(74) Mandataire: Dubois-Chabert, Guy

(56) Documents cités:
- WO-A-92/01648
- DE-A- 2 714 364
- CHEMICAL ABSTRACTS, vol. 109, no. 18, 1988, Columbus, Ohio, US; abstract no. 154986g, M. WATANABE 'Composite materials from petroleum pitch derived carbon fiber and mesophase pitch matrix' & JP-A-6312864

## Description

La présente invention se rapporte à la fabrication d'une pièce mécanique en matériau composite utilisant des fibres de carbone de haute performance, densifiées par pressage à chaud d'une poudre de mésophase.

Les pièces mécaniques en matériau composite auxquelles s'applique l'invention sont constituées de fibres de renfort en carbone noyées dans une matrice de carbone. Les fibres peuvent être courtes ou longues, orientées selon une, deux, trois, quatre ou plus directions de l'espace et être arrangées de façon aléatoire ou organisée. Elles peuvent être tissées, bobinées, nattées, tressées, organisées en torons, etc.

Les pièces en matériau composite carbone/carbone présentent des résistances thermomécaniques très élevées. Elles sont plus particulièrement destinées à la réalisation de véhicules spatiaux (navette ou aéronef), de patins de friction pour les freins, et de disques de frein. Dans le domaine spatial, ces pièces sont en particulier destinées à la réalisation du nez, des ailerons, des bords d'attaque ou des tuyères d'un véhicule spatial.

L'invention s'applique aussi dans d'autres secteurs industriels nécessitant l'utilisation de pièces en matériau réfractaire ayant de bonnes propriétés mécaniques comme par exemple pour la réalisation de moteurs de turbines, dans le domaine du sport de compétition (automobile, nautique) ainsi que dans des applications où c'est l'élément carbone qui est recherché comme dans le nucléaire par exemple.

Contrairement à d'autres domaines, on cherche à adapter les matériaux composites carbone/carbone aux applications finales de façon très précise. Actuellement, les technologies de fabrication permettent d'orienter les fibres de renfort selon les directions des contraintes auxquelles sont soumises les pièces.

Dans ces matériaux composites, la matrice de carbone peut être déposée sur les fibres, soit par voie gazeuse, soit par voie liquide.

Par voie gazeuse, on soumet une préforme fibreuse de la pièce à réaliser à un flux de gaz carboné dont les molécules se décomposent au contact des fibres. Le gaz est en général un alcane tel que le méthane ou un alcène, éthylène par exemple. Les températures utilisées sont très élevées, généralement supérieures à 1000°C.

Cette voie permet d'obtenir des matrices de très bonne qualité. Toutefois, pour densifier correctement les armatures fibreuses, il faut qu'elles comportent en leur sein de nombreuses porosités. Cette méthode est donc limitée quant au choix des armatures. En particulier, sa mise en oeuvre est compliquée pour les préformes fibreuses multidirectionnelles tissées.

De plus, les produits finis obtenus présentent difficilement moins de 15% de porosité pour des durées de dépôt qui peuvent atteindre des milliers d'heures. Ce procédé est donc long et coûteux et le taux élevé de porosité fragilise quelque peu la matrice et favorise en particulier son oxydation, à haute température en présence de gaz oxydants.

Par voie liquide, on fait pénétrer dans la préforme fibreuse un imprégnant liquide précurseur de carbone qui, par un traitement thermique ultérieur, se transforme en coke (c'est-à-dire en carbone). Le précurseur liquide est soit une résine généralement du type phénolformaldéhyde, soit un brai naturel. Ce brai provient de la distillation de la houille ou du pétrole.

La cuisson de ces précurseurs s'accompagne de dégagement gazeux, si bien qu'un cycle d'imprégnation-cuisson, même s'il est bien mené, conduit à une porosité résiduelle élevée. Afin de diminuer cette porosité, ces cycles d'imprégnation-cuisson peuvent être renouvelés autant de fois que nécessaire. Ces cycles peuvent aller au-delà de 5. Ces procédés par voie liquide sont donc longs et coûteux.

Par ailleurs, les résines et les brais étant solides à température ambiante, l'imprégnation de la préforme se fait soit à chaud, soit par addition d'un solvant approprié.

La densification par une résine peut être appliquée à de grandes pièces et peut être réalisée à l'aide d'équipements industriels relativement simples. Malheureusement, les matrices obtenues sont en général peu graphitables donc de faible densité, se présentant plutôt sous forme de verre et conduisant donc à des matériaux fragiles limitant ainsi leurs domaines d'application.

Avec une densification par brai, on obtient des matériaux de meilleure qualité : en effet, les matrices carbonées peuvent être plus facilement graphitées. Elles conduisent alors à des densités plus élevées. Toutefois, ce procédé utilise des moyens de mise en oeuvre complexes et coûteux. En effet, la cuisson du brai a tendance à rejetter la matrice hors des préformes fibreuses et on est obligé de la conduire sous des pressions isostatiques élevées, typiquement de 10⁸Pa, à des températures élevées environ 1000°C pour que l'opération de densification aient un rendement suffisant.

Avec la nécessité d'effectuer plusieurs cycles d'imprégnation-cuisson, ce procédé par brai est très coûteux. En outre, son coût et sa durée de fabrication croîssent très rapidement avec la taille des pièces à réaliser.

De plus, cette méthode n'est pas utilisable pour des pièces de grandes tailles (diamètre >50cm)

La densification par brai conduisant à des matériaux composites de meilleure qualité que celles des autres techniques, on a cherché à augmenter le rendement de la densification en améliorant la qualité des brais. Le rendement d'un brai est défini comme le pourcentage en poids de coke solide que le brai est capable de donner lorsqu'on le chauffe à 900°C environ en atmosphère neutre. En améliorant ce rendement, on peut diminuer la porosité des matériaux et donc le nombre de cycles imprégnation-cuisson.

Les meilleurs brais actuellement disponibles sur le marché ont un rendement de 80%.

Lorsqu'on distille un brai, qu'il soit d'origine pétrolière ou houillère, celui-ci se transforme vers 100 à 300°C en liquide visqueux isotrope. En augmentant la température de distillation, on obtient alors une nouvelle phase liquide à propriétés anisotropes, puis, en augmentant encore la température de distillation, on obtient du coke.

Les étapes de transformation liquide isotrope-liquide anisotrope et liquide anisotrope-coke sont irréversibles.

La phase anisotrope est en fait une phase cristal liquide au sens physique classique du terme, c'est-à-dire que ce n'est pas un solide mais que sa structure cristallographique est celle d'un solide. En outre, sa structure est lamellaire ; elle est formée par des molécules planes qui s'organisent bord à bord pour constituer des plans ou lamelles. Les diverses lamelles s'empilent les unes sur les autres pour donner un cristal liquide lamellaire. Cette structure cristalline lamellaire est due à la présence de molécules à cycle aromatique dans le brai de départ. Cette phase anisotrope est appelée mésophase. Elle constitue, à ce jour, le produit issu de brai capable de donner le meilleur rendement en coke. En général, cette mésophase est capable de produire du coke avec un rendement de 90%. Elle constitue donc un état très avancé de brai et ses propriétés sont différentes de celles des brais.

Dans le document FR-A-2 643 897, on a envisagé la réalisation d'un matériau carboné armé par des fibres de carbone, par fabrication in-situ d'un brai artificiel selon un processus chimique de polymérisation d'espèces d'hydrocarbure légères par catalyse. Le brai artificiel formé est un brai à phase mésomorphe en sommeil, c'est-à-dire pouvant produire une phase mésomorphe, et/ou un brai isotropique. Le matériau préimprégné obtenu est alors pressé.

Il est à noter qu'un brai mésophasique ne contient généralement pas de mésophase ; il est seulement capable de produire une mésophase.

Le document EP-A-0 379 328 décrit la fabrication d'un matériau composite carbone/carbone en partant d'un mélange de microsphères de mésocarbone et de précurseurs de fibres de carbone.

Dans ce procédé, on fabrique des fibres courtes de brai de différentes longueurs, typiquement de 0,2 à 5mm de long et on les mélange à des microsphères de mésocarbone et à de la poudre carbonée. Le mélange obtenu est placé dans un moule et pressé pour former des corps composites de forme prédéterminée.

La pression appliquée est comprise entre 10⁸ à 10⁹Pa (1 à 10 tonnes/cm²) avec des températures de pressage de 20 à 500°C et des vitesses de chauffage de 0,1 à 800°C par heure. Le matériau pressé est ensuite fritté entre 700 et 1300°C.

Le mélange de plus de deux sortes de fibres de longueurs différentes avec des microsphères de mésocarbone est difficilement réalisable en pratique. Ce procédé n'est donc pas industrialisable. De plus, la teneur en carbone de l'armature fibreuse obtenue est beaucoup plus faible que celle utilisée classiquement, rendant le matériau composite obtenu plus fragile que les autres.

Dans le document EP-A-0 402 915, il est décrit la fabrication d'un matériau composite carbone/carbone en utilisant plus de deux sortes de fibres de carbone de longueurs différentes, de la poudre de graphite et de la poudre de coke comme charge ainsi que du brai mésophasique comme liant. Ces différentes constituants sont mélangés en présence d'adhésifs puis mis dans un moule chauffé à 600°C et soumis à une pression de 5x10⁷Pa (500 kg/cm²). Le produit obtenu est ensuite soumis à une étape de carbonisation à 1100-1200°C puis à une étape de graphitation entre 2000 et 2500°C.

Ce procédé comporte plusieurs étapes de post-cuisson après moulage du matériau, à des températures élevées, supérieures à 1000°C, augmentant le coût de fabrication du matériau composite.

La présente invention a pour objet un nouveau procédé de fabrication d'une pièce en matériau composite du type carbone/carbone utilisant de la poudre de mésophase permettant de remédier aux différents inconvénients mentionnés ci-dessus. En particulier, ce procédé permet, de façon plus simple que les procédés de l'art antérieur et donc moins coûteuse, la fabrication de pièces en matériau carbone/carbone moins fragiles que celles de l'art antérieur. Il permet notamment la réalisation en un seul cycle d'imprégnation-cuisson l'obtention de pièces de porosité inférieure à 11%, de très grandes dimensions, avec des coûts de fabrication réduits. En particulier, le procédé de l'invention permet la réalisation de pièces en carbone/carbone de 2,3m de diamètre.

De façon plus précise, l'invention a pour objet un procédé de fabrication d'une pièce en matériau composite à armature en fibres de carbone noyée dans une matrice de carbone, comportant les étapes suivantes: disperser des microsphères de mésophase infusible dans une solution contenant un liant et un solvant apte à mouiller les fibres de carbone et former ainsi un bain d'imprégnation, le liant et le solvant étant non précurseurs de carbone, imprégner chaque fibre par le bain, disposer les fibres imprégnées dans un moule et presser de façon unidirectionnelle les fibres imprégnées dans le moule tout en les chauffant jusqu'à une première température T₁ supérieure à la température ambiante apte à évaporer le solvant et le liant et à faire fluer les microsphères de mésophase puis jusqu'à une seconde température T₂ supérieure à la première température apte à pyrolyser les microsphères de mésophase sous forme de coke.

Ce procédé permet l'obtention de pièces en matériau composite de haute performance, en un seul cycle d'imprégnation-moulage à chaud. Ce procédé est beaucoup plus court que les procédés de l'art antérieur.

Les fibres utilisées dans l'invention peuvent être des fibres longues ou continues, telles que celles classiquement utilisées pour le bobinage, constituées chacune de plusieurs filaments assemblés ou des fibres courtes qui sont le plus souvent des filaments unitaires.

Lorsque les fibres à imprégner sont longues ou continues, le procédé de l'invention comporte, selon une première variante, les étapes suivantes : préparation du bain d'imprégnation ; imprégnation des fibres par ce bain ; réalisation de nappes unidirectionnelles de fibres imprégnées en les disposant les unes à côté des autres selon une même direction ; empilement des nappes dans le moule et pressage unidirectionnel à chaud de l'empilement de nappes.

Ce procédé peut aussi, selon une seconde variante, comporter les étapes suivantes : préparation du bain d'imprégnation ; imprégnation de chaque fibre continue par ce bain ; découpe de chaque fibre imprégnée en tronçons ; mise en place des tronçons dans un moule et pressage unidirectionnel à chaud de ces tronçons.

Dans ce cas, il est avantageux d'effectuer une étape de calibrage de chaque fibre continue imprégnée avant de la découper.

Ce calibrage peut être obtenu par pultrusion en continu de chaque fibre imprégnée (passage dans un diaphragme ou une filière en tirant sur la fibre) éventuellement suivie d'un séchage.

Cette variante de mise en oeuvre permet la réalisation d'une pièce mécanique en matériau composite dit "aléatoire" en répartissant de façon aléatoire les tronçons de fibres obtenus.

Lorsque les fibres sont courtes, le procédé de l'invention comporte les étapes suivantes : préparation du bain d'imprégnation ; mélange de ce bain et des fibres courtes ; mise en place du mélange dans le moule, et pressage unidirectionnel à chaud du mélange.

Les microsphères de mésophase constituent en fait les grains d'une poudre ; sa granulométrie varie de 4 à 20µm selon son mode de fabrication.

Les poudres de mésophase utilisées dans l'invention sont en particulier celles fabriquées selon les procédés décrits dans les documents FR-A-2 531 721, FR-A-2 506 779, FR-A-2 293 295. Ces poudres sont formées par distillation d'un brai de houille ou de pétrole vers 400°C par un processus de germination-croissance sous forme de sphères. Ces sphères sont récupérées par centrifugation.

Elles présentent un rendement en coke élevé supérieur à 90% et se comportent à chaud, c'est-à-dire à une température supérieure à 350°C environ, comme des thermoplastiques.

Du fait de la taille des sphères de mésophase, on utilise selon l'invention, soit des fibres continues à gros filaments élémentaires, voisins de 30µm (et donc de diamètre proche de celui des grains de la poudre), soit on effectue un écartement des filaments de ces fibres pour accroître l'espace entre eux et laisser ainsi les microsphères pénétrer dans les fibres.

La poudre de mésophase est un matériau non fusible contrairement aux brais mésophasiques ou non. Aussi, afin d'assurer une densification homogène du substrat fibreux, le chauffage des fibres imprégnées dans le moule se fait progressivement en utilisant plusieurs paliers de température avec des vitesses de chauffe différentes.

La température T₁ dépend de la nature de la mésophase ; elle varie entre 350 et 450°C et par exemple entre 350 et 400°C.

Le chauffage jusqu'à la température T₁ doit être effectué le plus rapidement possible et avantageusement à une vitesse supérieure à 200°C/h.

Cette première étape de chauffage est suivie du chauffage jusqu'à la température T₂ avantageusement d'environ 500 a 700°C et typiquement d'environ 600°C, à une vitesse la plus lente possible et de préférence inférieure à 1 à 100°C/h. Cette étape permet la pyrolyse de la poudre de mésophase.

Le passage de la température de fluage T₁ à la température de pyrolyse T₂ doit être fait à une vitesse aussi basse que possible afin d'éviter l'éclatement de la pièce en matériau composite.

Avantageusement, on effectue alors, au-dessus de la température T₂, un chauffage additionnel jusqu'à la température T₃ d'environ 800 à 1000°C et typiquement de 900°C environ, parfaisant la pyrolyse et assurant le frittage du carbone. Cette étape est effectuée avantageusement à une vitesse au moins égale à 100°C/h.

Cette étape peut aller jusqu'à la graphitisation entre 2400°C et 2800°C pour augmenter la densité.

Contrairement aux procédés de l'art antérieur, la mise en forme de la pièce ainsi que son frittage sont réalisés simultanément, sous presse.

De façon avantageuse, le pressage est effectué entre 2x10⁷Pa à 10⁸Pa (0,2 et 1 tonne/cm²) ; en pratique, on utilise des pressions de 3x10⁷ à 5x10⁷ (300 à 500 kg/cm²).

L'utilisation du pressage unidirectionnel à chaud permet à la matrice carbonée de suivre le retrait des pièces lors de l'opération de pyrolyse. Ce retrait se produit du fait de l'élimination des contituants non carbonés des mésophases (H₂, O₂) mais aussi du fait de l'augmentation de la densité du substrat, associée à la matrice.

Par ce pressage unidirectionnel à chaud (>T₁), on diminue ainsi la porosité des matériaux ainsi que leurs fissurations résultant des dégagements gazeux.

Les pièces obtenues, en un seul cycle d'imprégnation-moulage à chaud sont de l'odre de 11%, ce qui est inférieur à ce que l'on obtient par la voie en phase gazeuse et ce qui correspond à ce que l'on obtient, par la voie brai classique, au bout de trois cycles d'imprégnation-cuisson.

Diverses techniques de pressage peuvent être utilisées dans l'invention. En particulier, on peut utiliser le pressage par compression adapté aux pièces aussi bien à fibres continues qu'à fibres courtes et le pressage par injection adapté aux fibres courtes en mélange avec de la poudre de graphite.

Le procédé de l'invention se différencie en outre des procédés de l'art antérieur utilisant des sphères de mésophase par l'emploi d'un bain d'imprégnation dans lequel sont suspendues ou dispersées les sphères de mésophase. Cette dispersion est nécessaire pour assurer une répartition homogène des microsphères de mésophase autour des fibres et ce d'autant que les microsphères sont non fusibles.

Le bain contient de 0,5 à 5% en poids de liant, de 25 à 75% en poids de solvant de ce liant et de 24,5 à 74,5% en poids de matières solides carbonées. Ces matières solides carbonées sont soit la poudre de mésophase, lors de l'utilisation de fibres longues, soit de la poudre de mésophase et des fibres, lorsque ces dernières sont courtes.

Les solvants et les liants sont utilisés uniquement pour l'imprégnation des fibres. Aussi, ces solvants et liants ne doivent pas être précurseurs de carbone ; en particulier leurs molécules ne doivent pas comporter de cycle aromatique.

Le solvant utilisé dans le bain d'imprégnation doit, en plus d'être solvant du liant, être capable de mouiller les fibres. Aussi, lorsqu'on utilise de l'eau comme liant, il est préférable d'ajouter à la solution un agent tensio-actif qui est en général un ester d'acide gras.

Le liant sert à lier les microsphères entre elles et aux fibres après évaporation du solvant. Il peut être un monomère ou un polymère organique liquide ou un mélange de polymères ou de monomères organiques. Ces polymères sont essentiellement des thermoplastiques.

Comme liants, on peut utiliser le polyméthacrylate de méthyle (PMMA), le polychlorure de vinyle, l'alcool polyvinylique (PVA), le polyéthylène qui sont solubles dans la plupart des solvants organiques ou leurs mélanges.

Les solvants utilisés peuvent être très divers. Ils présentent de préférence une faible tension de vapeur (<10⁴Pa) et une faible température d'ébullition (<120°C).

Comme solvants utilisables dans l'invention, on peut citer l'eau, l'acétonitrile, les alcools primaires inférieurs comme l'éthanol, le méthanol, le n-propanol ou des alcanes halogénés inférieurs tels que le dichlorométhane, le chloroforme, le dichloroéthane ou encore l'acétone, l'acétate d'éthyle, le tétrahydrofuranne, le dichlorobenzène, etc.

Avantageusement, il est possible de rajouter de la poudre de graphite à une teneur représentant de 0 à 40% en poids des matières solides carbonées dans le bain d'imprégnation. Cette poudre, au cours du moulage à chaud, se transformera, comme la mésophase, en coke. Cette poudre est utilisée plus spécialement dans le cas de fibres courtes. Sa granulométrie est avantageusement le 1/10ème de celui du diamètre des fibres.

Les fibres de carbone continues permettent d'obtenir des pièces en matériau composite de meilleures caractéristiques que celles utilisant des fibres courtes. En revanche, l'utilisation de ces dernières permet la réalisation de pièces de forme beaucoup plus complexe.

Ces fibres peuvent être tissées, tressées, nattées, orientées sur une ou plusieurs directions de l'espace.

D'autres caractéristiques et avantages de l'invention ressortiront mieux de la description qui va suivre, donnée à titre illustratif et non limitatif, en référence aux figures annexées, dans lesquelles :
- la figure 1 représente schématiquement les différentes étapes du procédé conforme à l'invention,
- la figure 2 illustre l'étape d'imprégnation de fibres continues conformément à l'invention.

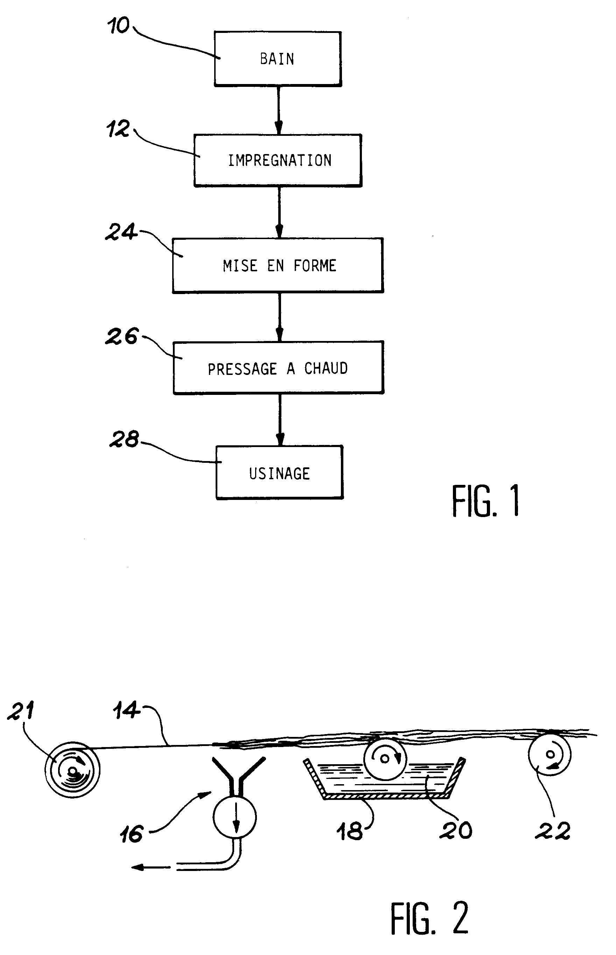

La première étape du procédé conforme à l'invention, représentée par le bloc 10 de la figure 1, consiste à préparer un bain d'imprégnation par dispersion d'une poudre de microsphères de mésophase dans une solution contenant un liant organique thermoplastique non cokéfiable et un solvant aqueux ou organique capable de solubiliser le liant et de mouiller les fibres de carbone. La poudre a une granulométrie de 4 à 20µm selon sa fabrication.

Le bain d'imprégnation contient de 25 à 75% en poids de solvant, ou mieux de 40 à 59% en poids ; de 0,5 à 5% en poids de liant soluble dans le solvant ou mieux de 1 à 3% en poids ; et de 24,5 à 74,5% en poids de matières solides ou mieux de 40 à 59%.

L'étape suivante du procédé consiste à imprégner des fibres par le bain.

Pour des fibres à imprégner courtes, celles-ci sont ajoutées au bain d'imprégnation, à température ambiante.

Dans ce cas, les matières solides peuvent consister en 10 à 70% en poids de fibres ou mieux de 55 à 65% en poids ; de 90 à 30% en poids de poudre de mésophase ou mieux de 40 à 25% en poids ; et de 0 à 40% en poids de poudre de graphite ou mieux de 5 à 10% en poids.

La poudre de graphite a une granulométrie identique à celle de la mésophase et est comprise entre 4 et 20µm.

Lorsque les fibres à imprégner sont continues, l'imprégnation se fait comme représentée sur la figure 2. A cet effet, une fibre continue 14 est dévidée de sa bobine 21 et est mise en défilement au-dessus d'un système d'écartement 16 des fibres, du type aspirateur, avant de passer dans un bac d'imprégnation 18 à température ambiante contenant le bain d'imprégnation 20. Ce bain a la même composition que celle donnée précédemment pour les fibres courtes, si ce n'est que les matières solides ne sont contituées que des microsphères de mésophase.

La fibre chargée peut alors être enroulée sur un support 22 de façon à former des nappes unidirectionnelles par disposition des fibres les unes à côté des autres, parallèles à une même direction.

L'étape suivante du procédé consiste soit à couler le mélange fibres-poudre-mésophase dans un moule, soit à disposer les nappes de fibres imprégnées dans un moule correspondant à la forme de la pièce à réaliser. Cette étape de mise en forme porte la référence 24.

Lorsque les fibres sont continues, les nappes de fibres sont empilées dans le moule de sorte que les fibres d'une nappe forment un angle de 0 à 90° avec les fibres des nappes adjacentes. Ainsi, il est possible de former un tissu.

L'étape suivante du procédé représentée par le bloc 26 sur la figure 1 consiste en un pressage unidirectionnel à chaud des fibres imprégnées placées dans le moule. Le pressage est effectué à une pression de 2x10⁷Pa à 10⁸Pa (0,2 à 1t/cm²) et en pratique de 3x10⁷Pa à 5x10⁷Pa (300 à 500 kg/cm²).

Le moule est celui classiquement utilisé pour la fabrication de pièces en matériau plastique thermodurcissable par compression.

De façon surprenante, les inventeurs ont trouvé que ce type de moule et de pressage était suffisant pour obtenir des pièces en carbone/carbone de haute performance mécanique sans avoir à utiliser un système complexe d'application d'une pression isostatique sur l'ensemble de la pièce.

Pendant toute la durée du pressage unidirectionnel, on effectue trois étapes de chauffage.

La première étape consiste en un chauffage rapide jusqu'à une température T₁ de fluage de la mésophase, comprise entre 350 et 400°C. Le chauffage jusqu'à la température T₁ est effectué de façon rapide, à une vitesse supérieure 200°C/h. La température T₁ est ensuite maintenue pendant une durée de 0 à 60 minutes en pratique.

On effectue ensuite un second chauffage des fibres, le plus lentement possible pour les faire passer de la température T₁ à une température T₂ de l'ordre de 600°C, à une vitesse inférieure à 1-100°C/h, et de préférence inférieure à 1-60°C/h. Le palier à la température T₂ est maintenu pendant 0 à 15 minutes en pratique. Il assure la transformation de la poudre de mésophase et éventuellement de la poudre de graphite en coke.

On effectue ensuite, si nécessaire, une troisième montée en température jusqu'à une température T₃ d'environ 900°C. La vitesse de montée en température est intermédiaire entre les deux précédentes et typiquement de l'ordre de 100°C/h. Un palier à la température T₃, de 30 minutes à 2 heures en pratique est alors maintenu. Ce palier de température assure le frittage et la graphitisation de la matrice de coke.

On laisse alors la pièce refroidir jusqu'à la température ambiante. Celle-ci peut alors subir une étape d'usinage finale, représentée par le bloc 28.

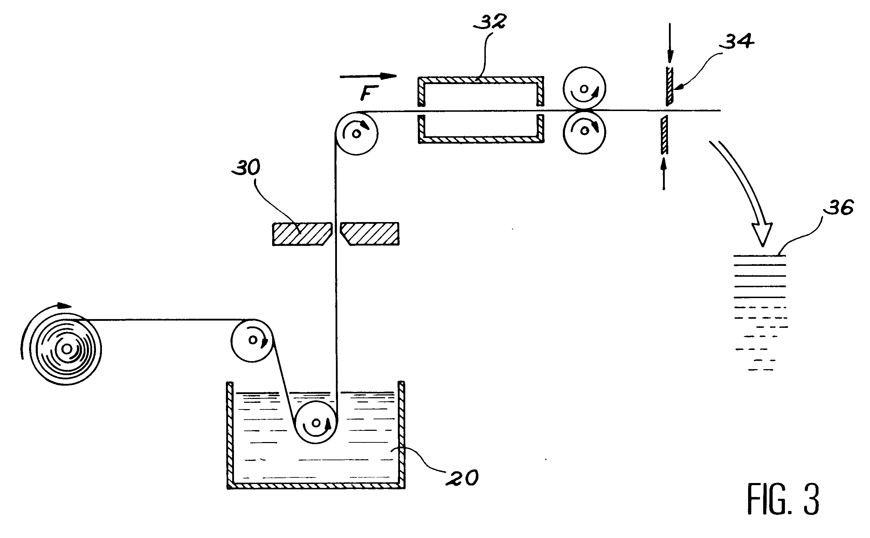

Dans une variante de mise en oeuvre, représentée sur la figure 3, on effectue l'imprégnation en continu au rouleau d'une fibre continue dans le bain 20, sans écarter les filaments de la fibre. La fibre imprégnée est ensuite pultrudée en continu (c'est-à-dire tirée dans le sens indiqué par F) dans une filière ou diaphragme 30 à une vitesse lente puis séchée dans un four 32 à une température qui est fonction de la vitesse de passage de la fibre.

La fibre continue imprégnée obtenue a ainsi un diamètre calibré. Elle est semi-rigide et souple.

Elle est ensuite découpée, comme indiqué en 34, en tronçons 36 que l'on dépose de façon aléatoire dans le moule, préférentiellement de façon que les tronçons de fibre soient orientés dans un plan normal à l'axe de pressage des tronçons dans le moule.

### EXEMPLE 1 : Réalisation d'une pièce en carbone/carbone avec des fibres courtes.

On réalise tout d'abord un bain d'imprégnation en ajoutant 100 parties en poids d'eau, 3 parties en poids d'alcool polyvinylique, 1 partie en poids d'agent tensio-actif, 80 parties en poids de poudre de mésophase et 20 parties en poids de fibres de carbone.

L'agent tensio-actif est de l'octylphénoxypolyéthoxyéthanol tel que celui commercialisé sous la référence Triton X100. La poudre de mésophase est en particulier celle vendue par Kawasaki Steel Corporation sous la référence KMFC (00322) et les fibres courtes sont par exemple celles vendues par Union Carbide sous la référence VMD. Ces fibres résultent de la pyrolyse d'un brai de houille ; elles présentent une longueur de 600 um environ et un diamètre de 30µm environ.

Ce bain est ensuite mis en place dans un moule en inox. On effectue alors un pressage unidirectionnel de 5x10⁷Pa (0,5t/cm²) avec un premier palier à 380°C pendant 25 minutes avec une vitesse de montée en température jusqu'à T₁ de 400°C/h.

L'ensemble est ensuite chauffé à une température T₂ de 600°C en maintenant le pressage de 5x10⁷Pa (0,5t/cm²). La montée en température de 385°C à 600°C est effectuée à une vitesse typiquement de 30°C/h. Un palier d'une heure environ à 600°C est réalisé. Elle est ensuite chauffée à 2600°C pour la graphiter.

La pièce obtenue a une porosité de 11% et peut être usinée.

Dans ces conditions, il a été réalisé des disques de 70mm de diamètre et respectivement de 5 et 10mm.

### EXEMPLE 2 :

Cet exemple se différencie de l'exemple 1 par l'emploi de PMMA au lieu d'alcool polyvinylique et de dichlorobenzène à la place de l'eau. En outre, le bain d'imprégnation est exempt d'agent tensio-actif. Les proportions du bain ainsi que les conditions de fabrication de la pièce sont les mêmes que celles données dans l'exemple 1.

### EXEMPLE 3 : Réalisation d'une pièce en matériau carbone/carbone à partir de fibres continues.

Le bain d'imprégnation est le même que celui décrit dans l'exemple 1 à l'exception de l'absence de fibres de carbone courtes.

La fibre continue utilisée est une fibre comportant 3000 filaments commercialisée sous la référence T300 de chez Toray, de 10µm de diamètre.

Après écartement des filaments de la fibre par aspiration, on l'imprègne du bain ci-dessus. On effectue alors plusieurs nappes unidirectionnelles (15 en tout) de fibres pré-imprégnées de mésophase. Ces nappes sont ensuite empilées les unes sur les autres de façon que les fibres forment des angles de 45° d'une nappe à l'autre.

Le pressage est effectué, comme décrit dans l'exemple 1.

### EXEMPLE 4 :

Cet exemple se différencie de l'exemple 1 par la composition du bain d'imprégnation. En effet, ce bain contient 60 parties en poids de fibres courtes, 8 parties en poids de poudre de graphite et 32 parties en poids de mésophase à la place des 20 parties en poids de fibres et des 80 parties en poids de mésophase de l'exemple 1.

La poudre de graphite a une granulométrie de 1um environ, et est en particulier celle vendue par la Société ACHESON sous la référence DAG 386.

La porosité de la pièce obtenue est encore de 11%.

### EXEMPLE 5 : Réalisation d'une pièce en matériau "aléatoire" carbone/carbone.

On effectue tout d'abord une dispersion de microsphères de mésophase dans une solution aqueuse acide à pH d'environ 4. L'emploi d'une solution acide stabilise la dispersion des microsphères.

Le bain obtenu contient 6 parties en poids de PVA pour 100 parties en poids d'eau et 100 parties en poids de microsphères de mésophase. Il a une viscosité d'environ 900MPa/s.

On fait passer une fibre continue de 3000 filaments en défilement à une vitesse de 1mm/min successivement dans le bain d'imprégnation, une filière calibrant la fibre à un diamètre de 1mm environ et un four chauffé à 150°C.

On découpe ensuite la fibre en tronçons de 10mm environ.

Ces tronçons sont placés dans un moule en graphite de façon à ce que leur axe longitudinal soit orienté selon un plan normal à l'axe du pressage.

Le pressage unidirectionnel est effectué à chaud sous azote sous une pression de 35MPa.

Les températures de pressage sont : T₁=380°C; T₂=600°C et T₃=1200°C et les montées en température sont conformes à l'exemple 1.

## Revendications

1. Procédé de fabrication d'une pièce en matériau composite à armature en fibres de carbone noyée dans une matrice de carbone, comportant les étapes suivantes : disperser des microsphères de mésophase infusible dans une solution contenant un liant et un solvant apte à mouiller les fibres de carbone et former ainsi un bain d'imprégnation (20), le liant et le solvant étant non précurseurs de carbone, imprégner chaque fibre (1) par le bain, disposer (24) les fibres imprégnées dans un moule et presser (26) de façon unidirectionnelle les fibres imprégnées dans le moule tout en les chauffant jusqu'à une première température T₁ supérieure à la température ambiante apte à évaporer le solvant et le liant et à faire fluer les microsphères de mésophase puis jusqu'à une seconde température T₂ supérieure à la première température apte à pyrolyser les microsphères de mésophase sous forme de coke.

2. Procédé selon la revendication 1, caractérisé en ce que les fibres (14) sont continues et en ce que l'on effectue les étapes suivantes : préparation du bain d'imprégnation ; imprégnation (12) des fibres par ce bain ; réalisation de nappes unidirectionnelles de fibres imprégnées en les disposant les unes à côté des autres selon une même direction ; empilement des nappes dans le moule et pressage unidirectionnel à chaud de l'empilement de nappes.

3. Procédé selon la revendication 2, caractérisé en ce que l'on effectue un écartement (16) des filaments des fibres continues.

4. Procédé selon la revendication 1, caractérisé en ce que les fibres sont courtes et en ce que l'on effectue les étapes suivantes : préparation du bain d'imprégnation ; mélange de ce bain et de fibres courtes ; mise en place du mélange dans le moule, et pressage unidirectionnel à chaud du mélange.

5. Procédé selon la revendication 1, caractérisé en ce qu'on effectue les étapes suivantes : préparation du bain d'imprégnation ; imprégnation de chaque fibre continue par ce bain ; découpe de chaque fibre imprégnée en tronçons ; mise en place des tronçons dans un moule de pressage unidirectionnel à chaud de ces tronçons.

6. Procédé selon la revendication 5, caractérisé en ce qu'on effectue une étape de calibrage de chaque fibre continue imprégnée avant de la découper.

7. Procédé selon l'une quelconque des revendications 1 à 6, caractérisé en ce que le bain d'imprégnation contient de 25 à 75% en poids de solvant, de 0,5 à 5% en poids de liant et de 24,5 à 74,5% en poids de matières solides carbonées formées au moins en partie des microsphères de mésophase.

8. Procédé selon la revendication 7, caractérisé en ce que les matières solides carbonées renferment de 10 à 70% en poids de fibres courtes et de 90 à 30% en poids de mésophase.

9. Procédé selon la revendication 8, caractérisé en ce que l'on introduit dans le bain d'imprégnation de la poudre de graphite représentant de 0 à 40% en poids des matières solides carbonées.

10. Procédé selon l'une quelconque des revendications 1 à 9, caractérisé en ce que les microsphères de mésophase ont un diamètre proche du diamètre des fibres.

11. Procédé selon l'une quelconque des revendications 1 à 10, caractérisé en ce que les microsphères de mésophase ont un diamètre de 4 à 20µm.

12. Procédé selon l'une quelconque des revendications 1 à 11, caractérisé en ce que la température T est ≥350 °C.

13. Procédé selon l'une quelconque des revendications 1 à 12, caractérisé en ce que le chauffage des fibres imprégnées jusqu'à la première température T₁ est effectué rapidement à une vitesse supérieure à 200°C/h.

14. Procédé selon l'une quelconque des revendications 1 à 13, caractérisé en ce que la température T₂ est choisi de 500 à 700°C.

15. Procédé selon l'une quelconque des revendications 1 à 13, caractérisé en ce que le chauffage des fibres jusqu'à la seconde température T₂ est effectué à une vitesse inférieure à 100°C/h.

16. Procédé selon l'une quelconque des revendications 1 à 15, caractérisé en ce que les fibres pressées sont chauffées dans le moule jusqu'à une troisième température T₃ supérieure à la température T₂.

17. Procédé selon la revendication 16, caractérisé en ce que la température T₃ est au moins égale à 800°C.

18. Procédé selon l'une quelconque des revendications 1 à 17, caractérisé en ce que le pressage est effectué à une pression de 2x10⁷Pa à 10⁸Pa.

## Claims

1. Process for the production of a composite material part having a carbon fibre reinforcement embedded in a carbon matrix involving the stages of dispersing infusible mesophase microspheres in a solution containing a binder and a solvent able to wet the carbon fibres and thus form an impregnation bath (20), the binder and the solvent not being carbon precursors, impregnating each fibre (1) by the bath, placing (24) the impregnated fibres in a mould and unidirectionally pressing (26) the impregnated fibres in the mould whilst heating them to a first temperature T₁ exceeding ambient temperature and able to evaporate the solvent and the binder and make the mesophase microspheres flow and then to a second temperature T₂ exceeding the first temperature and able to pyrolyze the mesophase microspheres in coke form.

2. Process according to claim 1, characterized in that the fibres (14) are continuous and in that the stages are the preparation of the impregnation bath, the impregnation (12) of the fibres by said bath, the formation of unidirectional layers of impregnated fibres by placing them alongside one another in the same direction, stacking the layers in the mould and hot unidirectional pressing of the layer stack.

3. Process according to claim 2, characterized in that the filaments of the continuous fibres are spaced apart (16).

4. Process according to claim 1, characterized in that the fibres are short and the stages consist of preparing the impregnation bath, mixing the said bath and the short fibres, placing the mixture in the mould and hot unidirectionally pressing the mixture.

5. Process according to claim 1, characterized in that the stages consist of preparing the impregnation bath, impregnating each continuous fibre by said bath, cutting each impregnated fibre into sections, placing the sections in a mould and hot undirectionally pressing the said sections.

6. Process according to claim 5, characterized in that each continuous impregnated fibre is calibrated before cutting it.

7. Process according to any one of the claims 1 to 6, characterized in that the impregnation bath contains 25 to 75% by weight solvent, 0.5 to 5% by weight binder and 24.5 to 74.5% by weight carbon-containing solid materials formed at least partly from mesophase microspheres.

8. Process according to claim 7, characterized in that the carbon-containing solid materials contain 10 to 70% by weight short fibres abd 90 to 30% by weight mesophase.

9. Process according to claim 8, characterized in that into the impregnation bath is introduced graphite powder representing 0 to 40% by weight of the carbon-containing solid materials.

10. Process according to any one of the claims 1 to 9, characterized in that the mesophase microspheres have a diameter close to that of the fibres.

11. Process according to any one of the claims 1 to 10, characterized in that the mesophase microspheres have a diameter of 4 to 20 µm.

12. Process according to any one of the claims 1 to 11, characterized in that the temperature T is ≥ 350°C.

13. Process according to any one of the claims 1 to 12, characterized in that the heating of the impregnated fibres up to the first temperature T₁ is performed rapidly at a speed exceeding 200°C/h.

14. Process according to any one of the claims 1 to 13, characterized in that the temperature T₂ is between 500 and 700°C.

15. Process according to any one of the claims 1 to 13, characterized in that the heating of the fibres up to the second temperature T₂ takes place at a speed below 100°C/h.

16. Process according to any one of the claims 1 to 15, characterized in that the pressed fibres are heated in the mould to a third temperature T₃ above the second temperature T₂.

17. Process according to claim 16, characterized in that the temperature T₃ is at least 800°C.

18. Process according to any one of the claims 1 to 17, characterized in that pressing takes place at a temperature of 2x10⁷ Pa to 10⁸ Pa.

## Patentansprüche

1. Verfahren zur Herstellung eines Teils aus mit Karbonfasern verstärktem Kompositmaterial, die in eine Matrix aus Kohlenstoff eingebettet sind, mit den folgenden Stufen: Lösen von Mikrosphären einer nichtschmelzbaren Mesophase in einer Lösung, die einen Binder und ein Lösemittel enthält, die in der Lage ist, die Karbonfasern zu befeuchten und so ein Imprägnationsbad (20) zu bilden, wobei der Binder und das Lösemittel kein Vorläufer des Kohlenstoff sind, Imprägnieren einer jeden Faser (1) durch das Bad, Anordnen (24) der imprägnierten Fasern in einer Form und Pressen (26) der Fasern in einer einheitlichen Richtung in der Form, während dieselbe bis auf eine erste Temperatur T₁ aufgeheizt werden, die höher als die Umgebungstemperatur ist, welche in der Lage ist, den Löser und den Binder zu Verdampfern und die Mikrospähren der Mesophase fließen zu lassen, danach bis auf eine zweite Temperatur T₂, die höher ist als die erste Temperatur und die in der Lage ist, die Mikrosphären der Mesophase durch Pyrolyse in eine Form von Koks zu bringen.

2. Verfahren nach Anspruch 1, **dadurch gekennzeichnet, daß** die Fasern (14) kontinuierlich sind und dadurch das die folgenden Schritte durchgeführt werden: Vorbereiten des Imprägnationsbades; Imprägnation (12) der Fasern durch das Bad; Bildung von gleichgerichteten Schichten von imprägnierten Fasern, indem diese eine neben den anderen in einer gleichen Richtung angeordnet werden; Aufschichten der Schichten in einer Form und Pressen des Stapels von Schichten in einer einheitlichen Richtung bei Wärme.

3. Verfahren nach Anspruch 2, **dadurch gekennzeichnet, daß** man die Filamente der kontinuierlichen Fasern beseitigt (16).

4. Verfahren nach Anspruch 1, **dadurch gekennzeichnet, daß** die Fasern kurz sind und dadurch das die folgenden Schritte durchgeführt werden: Vorbereiten des Imprägnationsbades; Mischen des Bades und der kurzen Fasern; Einfüllen der Mischung in die Form, und Pressen der Mischung in einer einheitlichen Richtung bei Wärme.

5. Verfahren nach Anspruch 1, **dadurch gekennzeichnet, daß** die folgenden Schritte durchgeführt werden: Vorbereiten des Imprägnationsbades; Imprägnation der kontinuierlichen Fasern durch das Bad; Schneiden einer jeden imprägnierten kontinuierlichen Faser in Stücke; Einfüllen der Stücke in eine Form zum Pressen dieser Stücke mit einheitlicher Richtung bei Wärme.

6. Verfahren nach Anspruch 5, **dadurch gekennzeichnet, daß** vor dem Schneiden ein Kalibrierschritt einer jeden imprägnierten kontinuierlichen Faser durchgeführt wird.

7. Verfahren nach einem der Ansprüche 1 - 6, **dadurch gekennzeichnet, daß** das Imprägnationsbad zwischen 25 und 75Gew.% Lösungsmittel, zwischen 0,5 bis 5Gew.% Binder und zwischen 24,5 bis 74,5Gew.% fester, karbonisierter Materialien enthält, die zumindest teilweise als Mikrosphären einer Mesophase ausgebildet sind.

8. Verfahren nach Anspruch 7, **dadurch gekennzeichnet, daß** die festen, karbonisierten Materialien 10 bis 70Gew.% an kurzen Fasern und 90 bis 30Gew.% Mesophase umfassen.

9. Verfahren nach Anspruch 8, **dadurch gekennzeichnet, daß** in das Imprägnationsbad Graphitpulver eingeführt wird, welches 0 bis 40Gew.% der festen, karbonisierten Materialien darstellt.

10. Verfahren nach einem der Ansprüche 1 - 9, **dadurch gekennzeichnet, daß** die Mikrosphären der Mesophase einen Durchmesser nahe dem Durchmesser der Fasern haben.

11. Verfahren nach einem der Ansprüche 1 bis 10, **dadurch gekennzeichnet, daß** die Mikrosphären der Mesophase einen Durchmesser zwischen 4 bis 20µm haben.

12. Verfahren nach einem der Ansprüche 1-11, **dadurch gekennzeichnet, daß** die Temperatur T³ 350°C ist.

13. Verfahren nach einem der Ansprüche 1-12, **dadurch gekennzeichnet, daß** die Erwärmung der imprägnierten Fasern auf die erste Temperatur T₁ schnell erfolgt, bei einer Geschwindigkeit von mehr als 200°C/Std..

14. Verfahren nach einem der Ansprüche 1-13, **dadurch gekennzeichnet, daß** die Temperatur T₂ zwischen 500 und 700°C gewählt wird.

15. Verfahren nach einem der Ansprüche 1-13, **dadurch gekennzeichnet, daß** die Erwärmung der Fasern auf die zweite Temperatur T₂ bei einer Geschwindigkeit von weniger als 100°C/Std. erfolgt.

16. Verfahren nach einem der Ansprüche 1-15, **dadurch gekennzeichnet, daß** die gepreßten Fasern in der Form auf eine dritte Temperatur T₃ erwärmt werden, die höher ist als die Temperatur T₂.

17. Verfahren nach Anspruch 16, **dadurch gekennzeichnet, daß** die Temperatur T₃ zumindest 800°C beträgt.

18. Verfahren nach einem der Ansprüche 1-17, **dadurch gekennzeichnet, daß** das Pressen bei einem Druck von 2x10⁷Pa bis 10⁸Pa erfolgt.
